# EUROPEAN PATENT SPECIFICATION

(11) **EP 3 617 513 B1**
(45) Date of publication and mention of the grant of the patent: **01.09.2021**
(21) Application number: 17907978.5
(22) Date of filing: 25.04.2017
(51) Int. Cl.: F04C 18/52, F04B 39/00, F04C 29/00, H02K 1/28

(54) **COMPRESSOR AND REFRIGERATION CYCLE DEVICE**
VERDICHTER UND KÜHLKREISVORRICHTUNG DAMIT
COMPRESSEUR ET DISPOSITIF À CYCLE DE RÉFRIGÉRATION

(43) Date of publication of application: 04.03.2020
(73) Proprietor: Mitsubishi Electric Corporation, Chiyoda-ku Tokyo 100-8310 (JP)
(72) Inventor: KOBA, Yu, Tokyo 100-8310 (JP); KAMIKAWA, Masaaki, Tokyo 100-8310 (JP); SHIRAISHI, Soichi, Tokyo 100-8310 (JP)
(74) Representative: Pfenning, Meinig & Partner mbB
(86) International application number: PCT/JP2017/016401
(87) International publication number: WO 2018/198202

(56) References cited:
- WO-A2-2015/075886
- JP-A- S5 932 691
- JP-A- 2000 145 675
- JP-B2- 5 772 924
- JP-U- S5 579 643
- JP-U- S5 831 746

## Description

### Technical Field

The present invention relates to a compressor and a refrigeration cycle apparatus, and more particularly, to a compressor having a rotor of a motor fixed to a shaft main body in such a manner that the rotor is detachable, and a refrigeration cycle apparatus provided with the compressor.

### Background Art

A compressor configured to compress refrigerant includes a motor including a rotor, a shaft portion including a shaft main body that is coupled to the rotor, and a compression mechanism unit coupled to the shaft main body and configured to compress the refrigerant by use of a driving force of the motor transmitted through the shaft main body. Furthermore, with expensive compressors and large compressors, the rotor of the motor is sometimes fixed to the shaft main body in such a manner that the rotor is detachable to allow the compressors to be used through maintenance.

Specifically, the rotor includes a first through hole in which the shaft main body is inserted. The rotor also includes a first keyway formed on an inner circumferential portion that corresponds to a wall surface portion that defines the first through hole and extending along a direction in which the first through hole passes through. The shaft main body includes a stepped portion and a male screw portion. The shaft main body also includes a second keyway formed on a part of an outer circumferential portion of the shaft main body that is between the stepped portion and the male screw portion and extending along an axial direction of the shaft main body. A part of the shaft main body that is between the stepped portion and the male screw portion is inserted in the first through hole of the rotor. A diameter of the part of the shaft main body to be inserted in the rotor is formed slightly smaller than a diameter of the first through hole of the rotor to allow the shaft main body to be attached to or detached from the rotor.

In addition to the shaft main body, the shaft portion also includes a key to be inserted in the first keyway of the rotor and the second keyway of the shaft main body. That is, the shaft main body and the rotor are coupled by a key. Furthermore, the shaft portion includes a nut to be screwed by the male screw portion of the shaft main body. The rotor is fixed by being sandwiched between the stepped portion of the shaft main body and the nut.

A fixing structure as described above for fixing a rotor of a motor on a shaft main body in such a manner that the rotor is detachable is used particularly in many compressors including a screw compression mechanism unit, or in other words, screw compressors. For example, Patent Literature 1 discloses an example of applying the fixing structure described above to a single screw compressor, which is a form of screw compressor.

In a case where the compressor compresses refrigerant, the rotor is rotated by power supplied from the motor. When the rotor is rotated, the shaft main body fixed to the rotor is also rotated. A driving force of the motor is thereby transmitted to the compression mechanism unit that is coupled to the shaft main body, and the refrigerant is compressed at the compression mechanism unit. That is, a rotary body made of the shaft main body and components such as the rotor, the key, and the nut fixed to the shaft main body is rotated at the time of the compressor compressing the refrigerant.

Here, when a center of gravity of the rotary body (the shaft main body, the rotor, the key, the nut, and other components) and an axial center of the shaft main body are greatly shifted from each other, oscillation and noise (beat sound) that are generated at the compressor at the time of rotation of the rotary body are increased.

For example, a diameter of the first through hole of the rotor may be increased to be excessively larger than a diameter of the part of the shaft main body to be inserted in the rotor so that the rotor may be easily attached to and detached from the shaft main body. In this case, a center axis of the rotor (or in other words, a center axis of the first through hole) is easily shifted from the axial center of the shaft main body at the time when the rotor is fixed to the shaft main body. In this state, the shift between the center of gravity of the rotary body and the axial center of the shaft main body is increased, and the oscillation and noise generated at the compressor are also increased.

To solve this problem, with the screw compressor described in Patent Literature 1, a tapered portion is provided at the stepped portion of the shaft main body, and a tapered portion is also provided at an end portion of an inner circumferential portion of the rotor that faces the stepped portion. Moreover, the tapered portion of the rotor is brought into contact with the tapered portion of the stepped portion of the shaft main body, and the rotor is fixed to the shaft main body, and the center axis of the rotor is thereby prevented from being shifted from the axial center of the shaft main body.
In patent literature 2, a scroll compressor is disclosed which has fixed and oscillating scroll teeth and in which a compression chamber is formed between the scroll teeth.
Patent literature 3 discloses a rotary electric machine rotor wherein a rotor core composed of laminated magnetic thin plates is attached to a rotor shaft.

### Citation List

### Patent Literature

Patent Literature 1: Japanese Patent No. 5772924
Patent Literature 2: Japanese Patent Application JP S5932691 A
Patent Literature 3: International Patent Application WO 2015075886 A2

### Summary of Invention

### Technical Problem

From the standpoint of cost reduction for a compressor, for example, a shaft main body and other components are each sometimes standardized and used in each of a plurality of compressors with compression mechanism units of different capacities. That is, one shaft main body is used by each of the compressors of different capacities, for example. At this time, because a capacity of a motor may be changed with the capacity of the compression mechanism unit, a motor of a small capacity is used for a compressor with a compression mechanism unit of a small capacity. Moreover, at the time of reducing the capacity of the motor, to use a common casing, a length of the motor in a direction in which a first through hole passes through is reduced without changing an outer diameter of the motor. That is, to reduce the capacity of the motor, lengths of a stator and a rotor included in the motor are reduced in the direction in which the first through hole passes through.

Consequently, in a case where one end portion of a rotor of a small-capacity motor is brought into contact with a stepped portion of a shaft main body, an end portion that is close to a nut and is the other end portion of the rotor is located at a position closer to the stepped portion of the shaft main body compared to a case of a rotor of a large-capacity motor. Consequently, when the rotor of the small-capacity motor is to be fixed to the shaft main body, to cause the rotor to be sandwiched between the stepped portion and the nut, a male screw portion of the shaft main body has to be formed long to reach a position at a part of the shaft main body that is closer to the stepped portion than is a position that is required to be reached at the time of fixing a rotor of a large-capacity motor to the shaft main body. Moreover, when a key protrudes toward the nut across an end portion of the rotor, the key and the nut interfere with each other, and the rotor cannot be sandwiched between the stepped portion and the nut. Consequently, to fix the rotor of a small-capacity motor to the shaft main body, a key with a shorter length than in the case of fixing the rotor of a large-capacity motor to the shaft main body has to be used.

In the case where a key with a short length as mentioned above is used, a second keyway of the shaft main body has a hollow part to which the key is not inserted. When such a hollow part is present, a center of gravity of a rotary body is moved and a shift between the center of gravity of the rotary body and an axial center of the shaft main body is increased, resulting in a problem that oscillation and noise generated at the compressor are increased. In particular, in a case where the motor is driven at a variable speed by an inverter, or in a case where low GWP refrigerant (low-pressure refrigerant), such as an HFO refrigerant, is used in a refrigeration cycle apparatus, the compressor is caused to operate at a high rotation frequency, or in other words, the rotary body is rotated at a high rotation frequency, and the influence of the problem is increased. Moreover, the technology disclosed in Patent Literature 1 is a technology for preventing the center axis of the rotor from being shifted from the axial center of the shaft main body. Consequently, the technology disclosed in Patent Literature 1 is not able to overcome the problem of the shift (eccentricity) of the center of gravity of the rotary body caused by the hollow part that is present in the second keyway, and is thus not able to overcome the problem that the oscillation and noise caused by the hollow part are increased.

The present invention has been made to solve the problem described above, and its first object is to provide a compressor that is capable of suppressing oscillation and noise generated at the compressor, even when a shaft main body or another component is standardized and used in each of a plurality of compressors with compression mechanism units of different capacities. Moreover, a second object of the present invention is to provide a refrigeration cycle apparatus provided with the compressor according to the present invention.

### Solution to Problem

A compressor according to an embodiment of the present invention includes a motor including a rotor; a shaft portion including a shaft main body that is coupled to the rotor; and a compression mechanism unit coupled to the shaft main body and configured to compress refrigerant by use of a driving force of the motor transmitted through the shaft main body. The rotor includes a first through hole and a first keyway that is formed on an inner circumferential portion and extends along a direction in which the first through hole passes through, the inner circumferential portion corresponding to a wall surface portion that defines the first through hole, the shaft main body includes a stepped portion, a male screw portion, and a second keyway that is formed on a part of an outer circumferential portion of the shaft main body that is between the stepped portion and the male screw portion and extends along an axial direction of the shaft main body, a part of the shaft main body that is between the stepped portion and the male screw portion being inserted in the first through hole of the rotor, and the shaft portion includes a key that is inserted in the first keyway of the rotor and the second keyway of the shaft main body, the key having a longer length than does the rotor in the direction in which the first through hole passes through, a spacer including a second through hole in which a part of the shaft main body that is between the stepped portion and the male screw portion is inserted, and a third keyway that is formed on an inner circumferential portion of the spacer and extends along a direction in which the second through hole passes through, the inner circumferential portion corresponding to a wall surface portion that defines the second through hole, the key being inserted in the third keyway, the spacer being located at at least one of a part between the stepped portion of the shaft main body and the rotor or a part between the male screw portion of the shaft main body and the rotor, and a nut in which the male screw portion of the shaft main body is screwed, the nut sandwiching and fixing the rotor and the spacer with the stepped portion of the shaft main body.

### Advantageous Effects of Invention

A configuration of the compressor according to an embodiment of the present invention is a configuration that is adopted at a time of manufacturing a compressor provided with a small-capacity compression mechanism unit, in a case where a shaft main body and other components are each to be standardized and used in each of a plurality of compressors with compression mechanism units of different capacities. That is, the configuration of the compressor according to an embodiment of the present invention is a configuration that is adopted at a time of manufacturing a compressor provided with a small-capacity motor, in a case where a shaft main body and other components are each to be standardized and used in each of a plurality of compressors.

The compressor according to an embodiment of the present invention includes the key that has the length in the direction in which the first through hole passes through is longer than does the rotor. Consequently, with the compressor according to an embodiment of the present invention, the key may be inserted in a hollow part that is formed in a second keyway of a shaft main body of some compressor. Here, with a configuration of some compressor, in a case where a long key as described above is used, the key protrudes from an end portion of a rotor to interfere with a nut, and the rotor cannot be sandwiched between a stepped portion of the shaft main body and the nut. On the other hand, the compressor according to an embodiment of the present invention includes the spacer including the second through hole in which a part of the shaft main body that is between the stepped portion and the male screw portion is inserted, and a third keyway that is formed on an inner circumferential portion and extends along the direction in which the second through hole passes through, the inner circumferential portion corresponding to a wall surface portion that defines the second through hole, the key being inserted in the third keyway, the spacer being located at at least one of a part between the stepped portion of the shaft main body and the rotor or a part between the male screw portion of the shaft main body and the rotor. That is, with the compressor according to an embodiment of the present invention, the spacer is located at the part of the key protruding from the end portion of the rotor. Consequently, the compressor according to an embodiment of the present invention may prevent interference between the key and the nut, and the rotor may be fixed to the shaft main body by sandwiching the rotor and the spacer between the stepped portion of the shaft main body and the nut. The compressor according to an embodiment of the present invention may therefore suppress a shift in a center of gravity of a rotary body that is caused by a hollow part that is present in the second keyway of the shaft main body of some compressor, and may suppress oscillation and noise generated at the compressor.

### Brief Description of Drawings

[Fig. 1] Fig. 1 is a schematic cross-sectional view of a screw compressor according to Embodiment 1 of the present invention.
[Fig. 2] Fig. 2 includes diagrams showing a compression operation of the screw compressor according to Embodiment 1 of the present invention.
[Fig. 3] Fig. 3 includes schematic cross-sectional views showing a rotor, and its periphery, of the screw compressor according to Embodiment 1 of the present invention.
[Fig. 4] Fig. 4 includes schematic cross-sectional views showing a rotor, and its periphery, of a screw compressor with a compression mechanism unit of a smaller capacity, among some screw compressors that each use a shaft main body and other components that are each standardized, this screw compressor not being comprised by the scope of the claims.
[Fig. 5] Fig. 5 is a refrigerant circuit diagram showing a refrigeration cycle apparatus according to Embodiment 1 of the present invention.
[Fig. 6] Fig. 6 includes schematic cross-sectional views showing a rotor, and its periphery, of a screw compressor according to Embodiment 2 of the present invention.
[Fig. 7] Fig. 7 is a diagram showing, observed from a direction C in Fig. 6, a shaft main body and a key in a periphery of a rotor fixing position of the screw compressor according to Embodiment 2 of the present invention.
[Fig. 8] Fig. 8 is a schematic cross-sectional view showing a rotor, and its periphery, of a screw compressor according to Embodiment 3 of the present invention.
[Fig. 9] Fig. 9 is a diagram showing, observed from a direction C in Fig. 8, a shaft main body and a key in a periphery of a rotor fixing position of the screw compressor according to Embodiment 3 of the present invention.
[Fig. 10] Fig. 10 is a schematic cross-sectional view showing a rotary body, and its periphery, of a screw compressor according to Embodiment 4 of the present invention.

### Description of Embodiments

Each of the following embodiments describes, with reference to the drawings, an example of a compressor according to the present invention, and an example of a refrigeration cycle apparatus provided with the compressor. The compressor according to the present invention is characteristic in a fixing structure for fixing a rotor of a motor to a shaft main body in such a manner that the rotor is detachable. Consequently, a form of a compression mechanism unit of the compressor according to the present invention is not particularly limited. In each of the following embodiments, a description of the compressor according to the present invention will be given, citing as an example a screw compressor that is provided with a screw compression mechanism unit where the rotor of the motor is often fixed to the shaft main body in such a manner that the rotor is detachable. Additionally, in the following drawings, those denoted by a same reference sign are identical or equivalent, and this applies to the entire description of the embodiments described below. Furthermore, forms of structural components described in the entire description are provided for illustrative purposes, and the present invention is not limited to such description. Moreover, a level of pressure and a size of a capacity are not defined in relation to absolute values, but are defined relatively on the basis of states and operation in the system, apparatus, and other components.

### Embodiment 1

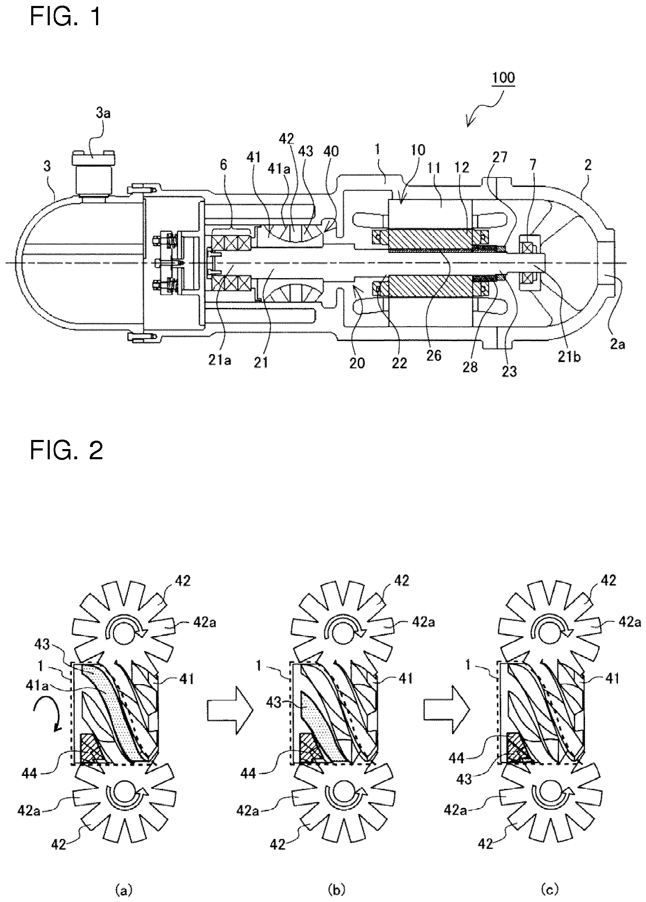

Fig. 1 is a schematic cross-sectional view of a screw compressor according to Embodiment 1 of the present invention. Additionally, in Fig. 1, to facilitate understanding of structures indicated by leader lines and shapes of the respective structures, some of the structures are shaded.

First, an overall configuration of a screw compressor 100 according to Embodiment 1 will be described with reference to Fig. 1. Additionally, as described above, the screw compressor 100 according to Embodiment 1 is characteristic in a fixing structure for fixing a rotor 12 of a motor 10 to a shaft main body 21 in such a manner that the rotor 12 is detachable. Consequently, the configuration of the screw compressor according to Embodiment 1 other than the fixing structure is the same as that of some screw compressor, and various known configurations may be adopted.

The screw compressor 100 is a single screw compressor, which is a form of screw compressor. The screw compressor 100 includes a motor 10, a shaft portion 20, and a single-screw compression mechanism unit 40. The screw compressor 100 also includes an outer shell unit that houses the motor 10, the shaft portion 20, and the compression mechanism unit 40. The outer shell unit is made of a casing 1, a motor cover 2, and an oil separator 3.

The casing 1 has a cylindrical shape, and the motor 10, the shaft portion 20, and the compression mechanism unit 40 are housed inside. The motor cover 2 blocks an opening port at one end portion of the casing 1. The motor cover 2 is provided with a suction port 2a for introducing, into the outer shell unit, refrigerant to be compressed at the compression mechanism unit 40. The oil separator 3 blocks an opening port at the other end portion of the casing 1. Refrigerant that is compressed at the compression mechanism unit 40 is discharged into the oil separator 3. Then, the compressed refrigerant filling the oil separator 3 is discharged outside the screw compressor 100 through a discharge port 3a provided in the oil separator 3. Additionally, lubricating oil, not shown, is stored inside the outer shell unit for the purpose of lubricating sliding parts between structural components of the screw compressor 100, for example. The refrigerant compressed at the compression mechanism unit 40 is in a state where the refrigerant is mixed with the lubricating oil. The oil separator 3 also is configured to separate the compressed refrigerant and the lubricating oil that is mixed in the refrigerant.

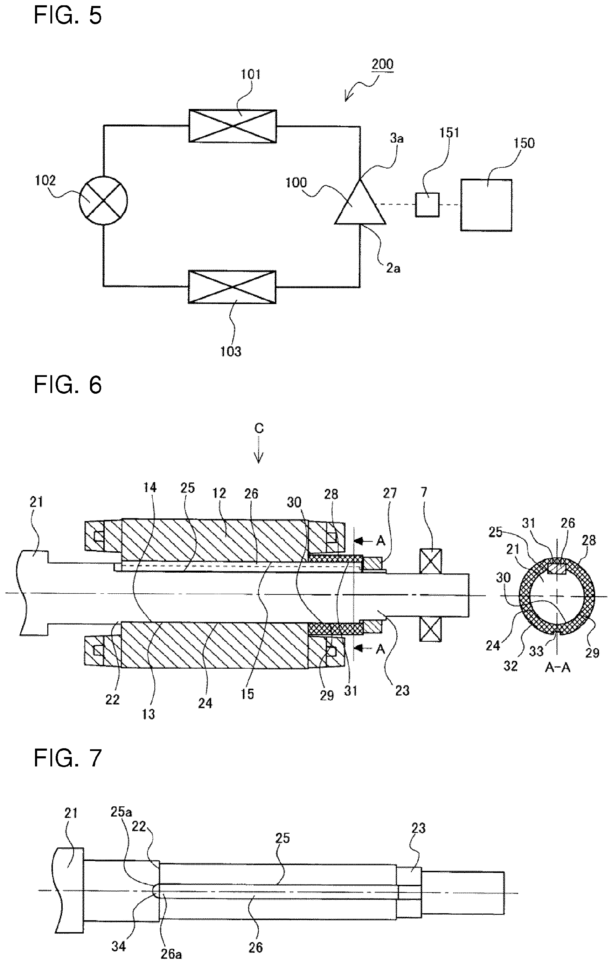

The motor 10 includes a stator 11 fixed on an inner circumferential surface of the casing 1, and the rotor 12 located inside the stator 11. The motor 10 may be a constant speed machine with a constant driving frequency, or may be configured to be driven at a variable speed by an inverter (see Fig. 5 described later). That is, the motor 10 may be of an inverter motor that is driven in such a manner that a capacity of the motor 10 can be adjusted by changing the driving frequency.

The shaft portion 20 includes a shaft main body 21, a key 26, a nut 27, and other components. The shaft main body 21 is coupled to the rotor 12 of the motor 10. In Embodiment 1, the shaft main body 21 is coupled to the rotor 12 by the key 26. Additionally, details of a coupling structure between the shaft main body 21 and the rotor 12 will be given later.

The shaft main body 21 includes a stepped portion 22 and a male screw portion 23. Furthermore, the nut 27 is screwed by the male screw portion 23. The rotor 12 is fixed to the shaft main body 21 by being sandwiched between the stepped portion 22 and the nut 27. Additionally, the shaft portion 20 according to Embodiment 1 also includes a spacer 28. With the screw compressor 100 according to Embodiment 1, the spacer 28, described later, is also sandwiched between the stepped portion 22 and the nut 27, in addition to the rotor 12. Details of a fixing structure between the shaft main body 21 and the rotor 12 will be given later.

Moreover, the shaft main body 21 is supported by a first bearing 6 and a second bearing 7 in such a manner that the shaft main body 21 is rotatable. Specifically, of both end portions of the shaft main body 21, an end portion that is opposite to the male screw portion 23 across the stepped portion 22 is taken as a first end portion 21a, and an end portion that is closer to the male screw portion 23 than is the stepped portion 22 is taken as a second end portion 21b. In this case, the first bearing 6 supports the shaft main body 21 in a range between the first end portion 21a and the stepped portion 22 in such a manner that the shaft main body 21 is rotatable. Furthermore, the second bearing 7 supports the shaft main body 21 in a range between the second end portion 21b and the male screw portion 23 in such a manner that the shaft main body 21 is rotatable. Additionally, in Embodiment 1, the first bearing 6 supports a periphery of the first end portion 21a in such a manner that the shaft main body 21 is rotatable. The second bearing 7 supports a periphery of the second end portion 21b in such a manner that the shaft main body 21 is rotatable.

That is, the shaft main body 21 and components fixed to the shaft main body 21 are rotated around an axial center of the shaft main body 21. In the following, the shaft main body 21 and components fixed to the shaft main body 21 will be collectively referred to as a rotary body. Additionally, the components fixed to the shaft main body 21 are the rotor 12, the key 26, the nut 27, and the spacer 28. Furthermore, as the compression mechanism unit 40 according to Embodiment 1 is of a single-screw compression mechanism unit, a screw rotor 41, described later, is also fixed to the shaft main body 21 and is rotated together with the shaft main body 21. Consequently, with the screw compressor 100 according to Embodiment 1, the screw rotor 41 is also a part of the rotary body.

The compression mechanism unit 40 is coupled to the shaft main body 21, and compresses refrigerant by use of a driving force of the motor 10 that is transmitted through the shaft main body 21. As described above, the compression mechanism unit 40 according to Embodiment 1 is a single-screw compression mechanism unit. The compression mechanism unit 40 includes one screw rotor 41, and two gate rotors 42. The screw rotor 41 is fixed to the shaft main body 21 in a range between the first end portion 21a and the stepped portion 22. The screw rotor 41 includes a plurality of helical screw grooves 41a on an outer circumferential portion.

The two gate rotors 42 are arranged at positions that are point-symmetrical about the shaft main body 21, on respective sides of the screw rotor 41. The gate rotor 42 has a disc shape, and a plurality of teeth 42a are provided along a circumferential direction on an outer circumferential surface. The tooth 42a of the gate rotor 42 is meshed with the screw groove 41a. That is, the tooth 42a is meshed and engaged with the screw groove 41a. Spaces surrounded by the teeth 42a of the gate rotors 42, the screw grooves 41a, and an inner circumferential surface of the casing 1 are made as compression chambers 43 (see also Fig. 2 described later). A plurality of compression chambers 43 are formed at positions that are point-symmetrical about a radial center of the screw rotor 41.

Next, a compression operation of the screw compressor 100 will be described.

Fig. 2 includes diagrams showing a compression operation of the screw compressor according to Embodiment 1 of the present invention. Additionally, Fig. 2(a) shows a suction step, Fig. 2(b) shows a compression step, and Fig. 2(c) shows a discharge step.

As shown in Fig. 2, when the screw rotor 41 is rotated by the motor 10 shown in Fig. 1 through the shaft main body 21 shown in Fig. 1, the teeth 42a of the gate rotors 42 are relatively moved inside the screw grooves 41a, which defines parts of the compression chambers 43. At this time, a suction step, a compression step, and a discharge step are sequentially performed inside the compression chamber 43. The suction step, the compression step, and the discharge step are taken as one cycle, and the cycle is repeated. Here, each step will be described focusing on the compression chamber 43 that is shaded in Fig. 2.

Fig. 2(a) shows a state of the compression chamber 43 in the suction step. The screw rotor 41 is driven by the motor 10, and is rotated in a direction of a solid arrow. When the screw rotor 41 is rotated, a capacity of the compression chamber 43 is reduced as shown in Fig. 2(b).

When the screw rotor 41 is further rotated, the compression chamber 43 communicates with outside through a discharge port 44, as shown in Fig. 2(c). Highpressure refrigerant gas compressed inside the compression chamber 43 is thereby discharged outside through the discharge port 44. Then, compression is performed again in a similar manner by a back surface of the screw rotor 41. As the compression chambers 43 are formed at positions that are point-symmetrical about the radial center of the screw rotor 41, loads that are applied to the shaft main body 21 by fluid pressure inside the compression chambers 43 are offset by each other in one cycle.

As described above, at the time of compression of refrigerant by the screw compressor 100, the screw rotor 41 is caused to rotate. That is, the shaft main body 21 fixed to the screw rotor 41, and the components fixed to the shaft main body 21 are rotated. That is, at the time of compression of refrigerant by the screw compressor 100, the rotary body is caused to rotate. At this time, when a shift between a center of gravity of the rotary body and the axial center of the shaft main body 21, which corresponds to a center of rotation of the rotary body, is great, oscillation and noise (beat sound) that are generated at the compressor at the time of rotation of the rotary body are increased. Consequently, the rotary body is desirably formed in such a manner that the center of gravity of the rotary body substantially coincides with the axial center of the shaft main body 21.

Next, details of a coupling structure between the shaft main body 21 and the rotor 12, and details of a fixing structure between the shaft main body 21 and the rotor 12 will be given with respect to the screw compressor 100 according to Embodiment 1.

From the standpoint of cost reduction for a compressor, for example, the shaft main body and other components are each sometimes standardized and used in each of a plurality of compressors with compression mechanism units of different capacities. That is, one shaft main body is used by each of the compressors of different capacities, for example. At this time, there has been a problem that the shift between the center of gravity of the rotary body and the axial center of the shaft main body is increased for a compressor with a compression mechanism unit of a small capacity, and that oscillation and noise generated at the compressor are increased.

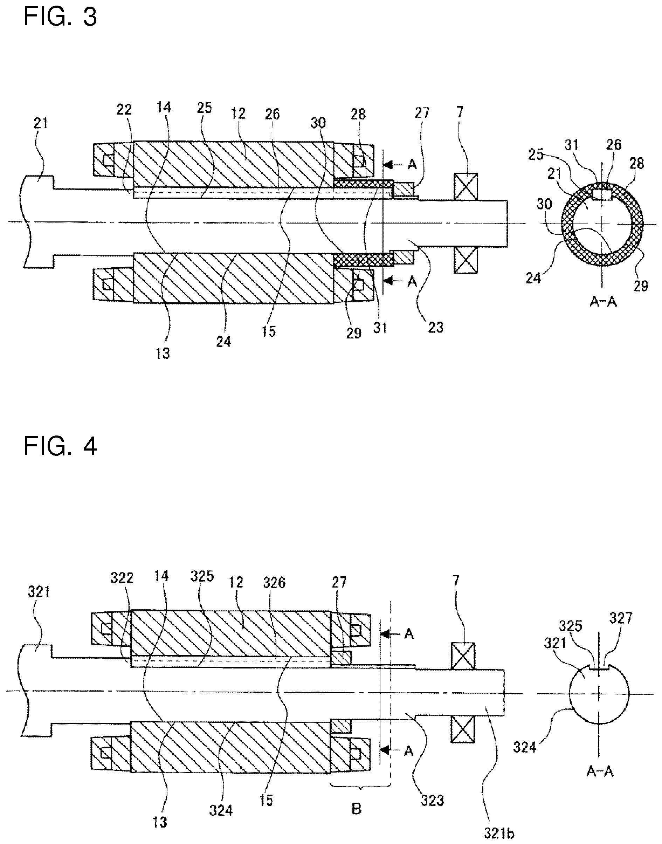

Consequently, with the screw compressor 100 according to Embodiment 1, the rotor 12 is coupled and fixed to the shaft main body 21, as shown in Fig. 3 described below, and oscillation and noise are thereby suppressed. That is, the screw compressor 100 according to Embodiment 1 is the compressor with a compression mechanism unit of a smaller capacity, among a plurality of compressors that each use the shaft main body and other components that are each standardized.

Fig. 3 includes schematic cross-sectional views showing the rotor, and its periphery, of the screw compressor according to Embodiment 1 of the present invention. Additionally, in Fig. 3, to facilitate understanding of structures indicated by leader lines and shapes of the respective structures, some of the structures are shaded.

The rotor 12 has a substantially circular cylindrical shape, and includes a through hole 13 at a substantially center part. Furthermore, the rotor 12 includes a keyway 15 formed on an inner circumferential portion 14 and extending along a direction in which the through hole 13 passes through, and the inner circumferential portion 14 corresponds to a wall surface portion that defines the through hole 13. A part of the shaft main body 21 that is between the stepped portion 22 and the male screw portion 23 is inserted in the through hole 13. On the other hand, the shaft main body 21 includes a keyway 25 formed on a part of an outer circumferential portion 24 of the shaft main body 21 that is between the stepped portion 22 and the male screw portion 23 and extending along an axial direction of the shaft main body 21. Moreover, the key 26 having a substantially prismatic cylindrical shape is inserted in the keyway 15 of the rotor 12 and the keyway 25 of the shaft main body 21. That is, the rotor 12 and the shaft main body 21 are coupled by the key 26. Rotation torque of the rotor 12 is thereby transmitted to the shaft main body 21 through the key 26.

Additionally, the through hole 13 corresponds to a first through hole of the present invention. The keyway 15 corresponds to a first keyway of the present invention. The keyway 25 corresponds to a second keyway of the present invention.

A length of the key 26 in the direction in which the through hole 13 passes through is longer than a length of the rotor 12 in the direction in which the through hole 13 passes through. Consequently, when the rotor 12 is brought into contact with the stepped portion 22 of the shaft main body 21, an end portion of the key 26 that is close to the male screw portion 23 protrudes outside the rotor 12 from an end portion of the rotor 12 that is close to the male screw portion 23. Furthermore, the shaft portion 20 according to Embodiment 1 includes the spacer 28 that is located at the part at which the key 26 protrudes.

Specifically, the spacer 28 has a substantially circular cylindrical shape, and includes a through hole 29 at a substantially center part. Furthermore, the spacer 28 includes a keyway 31 formed on an inner circumferential portion 30 and extending along a direction in which the through hole 29 passes through, and the inner circumferential portion 30 corresponds to a wall surface portion that defines the through hole 29. A part of the shaft main body 21 that is between the stepped portion 22 and the male screw portion 23 is inserted in the through hole 29. Furthermore, the key 26 is inserted in the keyway 31.

Additionally, the through hole 29 corresponds to a second through hole of the present invention. The keyway 31 corresponds to a third keyway of the present invention.

That is, with the screw compressor 100 according to Embodiment 1, the rotor 12 is fixed to the shaft main body 21 by sandwiching the rotor 12 and the spacer 28 between the stepped portion 22 and the nut 27. At this time, the spacer 28 is located between the rotor 12 and the nut 27. In other words, the spacer 28 is located between the rotor 12 and the male screw portion 23 of the shaft main body 21. By fixing the rotor 12 to the shaft main body 21 in this manner, an effect can be obtained that oscillation and noise that are generated at a compressor with a compression mechanism unit of a small capacity when the shaft main body and other components are each standardized and used in each of a plurality of compressors may be suppressed.

In the following, the reason why the effect can be achieved by the screw compressor 100 according to Embodiment 1 will be described.

Fig. 4 includes schematic cross-sectional views showing a rotor, and its periphery, of a screw compressor with a compression mechanism unit of a smaller capacity, among some screw compressors that each use a shaft main body and other components that are each standardized. Additionally, in Fig. 4, to facilitate understanding of structures indicated by leader lines and shapes of the respective structures, some of the structures are shaded. Furthermore, in Fig. 4, structures the same as those of the screw compressor 100 according to Embodiment 1 are denoted by same reference signs. Moreover, a dash-dot-dotted line in Fig. 4 indicates a position where an end portion of the rotor and the nut 27 come into contact with each other when the rotor is fixed to a shaft main body 321 of some screw compressor with a compression mechanism unit of a larger capacity.

Like the shaft main body 21 according to Embodiment 1, the shaft main body 321 of some screw compressor includes a stepped portion 322 and a male screw portion 323. Furthermore, the nut 27 is screwed by the male screw portion 323. Moreover, like the shaft main body 21 according to Embodiment 1, the shaft main body 321 of some screw compressor includes a keyway 325 formed on a part of an outer circumferential portion 324 of the shaft main body 321 that is between the stepped portion 322 and the male screw portion 323 and extending along an axial direction of the shaft main body 321. The rotor 12 and the shaft main body 321 are coupled to each other by insertion of a key 326 having a substantially prismatic cylindrical shape in the keyway 15 of the rotor 12 and the keyway 325 of the shaft main body 321.

Furthermore, some screw compressor with the compression mechanism unit of the smaller capacity does not include the spacer 28 according to Embodiment 1, and is therefore not comprised by the scope of the claims, and the rotor 12 is fixed to the shaft main body 321 by being directly sandwiched between the stepped portion 322 and the nut 27. Consequently, with some screw compressor with the compression mechanism unit of the smaller capacity, a length of the key 326 in the direction in which the through hole 13 passes through is shorter than or equal to the length of the rotor 12 in the direction in which the through hole 13 passes through. This is because, when the key 326 protrudes toward the nut 27 across the end portion of the rotor 12, the key 326 and the nut 27 interfere with each other, the rotor 12 cannot be sandwiched between the stepped portion 322 and the nut 27, and thus, the rotor 12 cannot be fixed to the shaft main body 321.

Here, the capacity of the motor may be changed with the capacity of the compression mechanism unit, and thus, when the shaft main body and other components are each standardized, the capacity of the compressor is also changed. At this time, to use a common casing, the length of the through hole 13 at the motor in the direction in which the through hole 13 passes through is changed without changing an outer diameter of the motor. That is, in the case of increasing the capacity of the motor, lengths of the stator and the rotor included in the motor are increased in the direction in which the through hole 13 passes through. Consequently, in the case where the shaft main body 321 is used in some screw compressor with the compression mechanism unit of the larger capacity, when an end portion of the rotor that is close to the stepped portion 322 is brought into contact with the stepped portion 322, the end portion of the rotor that is close to the nut 27 protrudes toward a second end portion 321b of the shaft main body 321 compared to some screw compressor with the compression mechanism unit of the smaller capacity. That is, with some screw compressor with the compression mechanism unit of the larger capacity, when the rotor is fixed to the shaft main body 321, the end portion of the rotor and the nut 27 come into contact with each other at a position indicated by the dash-dot-dotted line in Fig. 4, which shows some screw compressor of a smaller capacity not comprised by the scope of the claims.

Consequently, in the case where the shaft main body 321 is used in some screw compressor with the compression mechanism unit of the larger capacity, the key for coupling the rotor and the shaft main body 321 extends close to the position of the dash-dot-dotted line in Fig. 4. In other words, the keyway 325 of the shaft main body 321 has to be formed extending toward the second end portion 321b across the dash-dot-dotted line in Fig. 4. Consequently, when the shaft main body 321 is standardized and used in each of a plurality of screw compressors, with respect to some screw compressor with the compression mechanism unit of the larger capacity, the key is inserted in a range of the keyway 325 indicated by B in Fig. 4. On the other hand, with some screw compressor with the compression mechanism unit of the smaller capacity, the key 326 is not inserted in the range of the keyway 325 indicated by B in Fig. 4.

That is, with some screw compressor with the compression mechanism unit of the smaller capacity, a hollow part 327 is present in the range of the keyway 325 indicated by B in Fig. 4. When the hollow part 327 is present, the center of gravity of the rotary body of some screw compressor with the compression mechanism unit of the smaller capacity is moved, and the shift between the center of gravity of the rotary body and the axial center of the shaft main body 321 is increased. That is, oscillation and noise generated at the compressor are increased for some screw compressor with the compression mechanism unit of the smaller capacity.

On the other hand, with the screw compressor 100 according to Embodiment 1, the key 26, which has the length that is longer than length of the rotor 12 in the direction in which the through hole 13 passes through, may be used. That is, the screw compressor 100 according to Embodiment 1 may use, as the key 26, a key that is used for a screw compressor with a compression mechanism unit of a larger capacity that uses the shaft main body 21 that is standardized. Consequently, with the screw compressor 100 according to Embodiment 1, the hollow part 327 found in some screw compressor is not present at the shaft main body 21.

Furthermore, with the screw compressor 100 according to Embodiment 1, the spacer 28 is located at the part of the key 26 protruding from the end portion of the rotor 12. Consequently, the screw compressor 100 according to Embodiment 1 may prevent interference between the key 26 and the nut 27, and thus, the rotor 12 and the spacer 28 may be sandwiched between the stepped portion 22 of the shaft main body 21 and the nut 27, and the rotor 12 may be thereby fixed to the shaft main body 21.

Consequently, with the screw compressor 100 according to Embodiment 1, a shift in the center of gravity of the rotary body that is caused by the hollow part 327 may be suppressed, and oscillation and noise generated at the screw compressor 100 may be suppressed.

Additionally, the spacer 28 is for suppressing eccentricity of the center of gravity of the rotary body, and is thus desirably made of a material having an equal specific gravity as do the shaft main body 21 and the key 26. Moreover, in the case of fixing the rotor of the motor to the shaft main body 21 of the screw compressor with the compression mechanism unit of the larger capacity that uses the shaft main body 21 that is standardized, the rotor is only required to be directly sandwiched between the stepped portion 22 and the nut 27 without using the spacer 28.

Lastly, in Embodiment 1, an example of a refrigeration cycle apparatus provided with the screw compressor 100 according to Embodiment 1 will be described.

Fig. 5 is a refrigerant circuit diagram showing a refrigeration cycle apparatus according to Embodiment 1 of the present invention.

A refrigeration cycle apparatus 200 shown in Fig. 5 includes the screw compressor 100, a condenser 101, an expansion device 102, and an evaporator 103. The refrigeration cycle apparatus 200 adopts a configuration in which the motor 10 of the screw compressor 100 is driven at a variable speed by an inverter 151. That is, the motor 10 of the screw compressor 100 is rotated at a rotation frequency based on a frequency of AC power supplied from the inverter 151. Consequently, the refrigeration cycle apparatus 200 includes a controller 150 for controlling the frequency of the AC power of the inverter 151, or in other words, for controlling the rotation frequency of the motor 10.

In the case where the motor of the compressor is driven at a variable speed by the inverter, the compressor is sometimes caused to operate at a high speed. That is, the rotary body of the compressor is sometimes caused to rotate at a high speed. Consequently, in the case where the motor of the compressor is driven at a variable speed by the inverter, oscillation and noise generated by the shift between the center of gravity of the rotary body and the axial center of the shaft main body tend to be more easily increased. It is therefore effective to use the screw compressor 100 according to Embodiment 1, which is capable of suppressing oscillation and noise, as the compressor that is driven at a variable speed by the inverter. Additionally, the inverter 151 may be a component of the screw compressor 100, or may be provided separately from the screw compressor 100, as a component of the refrigeration cycle apparatus 200.

The condenser 101 is configured to condense refrigerant that is compressed at the screw compressor 100. A refrigerant inlet of the condenser 101 is connected to the discharge port 3a of the screw compressor 100 by a refrigerant pipe. The expansion device 102 is an expansion valve, for example, and is configured to expand the refrigerant flowing out of the condenser 101. A refrigerant inlet of the expansion device 102 is connected to a refrigerant outlet of the condenser 101 by a refrigerant pipe. The evaporator 103 is configured to evaporate refrigerant flowing out of the expansion device 102. A refrigerant inlet of the evaporator 103 is connected to a refrigerant outlet of the expansion device 102 by a refrigerant pipe. Furthermore, a refrigerant outlet of the evaporator 103 is connected to the suction port 2a of the screw compressor 100.

Moreover, the refrigeration cycle apparatus 200 uses, as refrigerant, an HFO refrigerant or an HFO-based mixed refrigerant, which are low GWP refrigerant. The HFO refrigerant may be tetrafluoropropene such as HFO1234yf, HFO1234ze, and HFO1243Zf represented by chemical formula C₃H₂F₄. Because the HFO refrigerant is low-pressure refrigerant at a low operating pressure, density is smaller and a refrigeration capacity is reduced compared to a case of using an HFC refrigerant such as R410A and R407C, and thus, the compressor is caused to rotate at a high speed. That is, the rotary body of the compressor is caused to rotate at a high speed. Consequently, in the case of using the HFO refrigerant, oscillation and noise generated by the shift between the center of gravity of the rotary body and the axial center of the shaft main body tend to be more easily increased. In the case of using the HFO refrigerant, it is therefore effective to use the screw compressor 100 according to Embodiment 1, which is capable of suppressing oscillation and noise.

### Embodiment 2

Depending on a shape of the keyway 25 of the shaft main body 21 and a shape of the key 26, a small hollow part is sometimes formed at an end portion of the keyway 25. In such a case, the spacer 28 is only required to be formed in a manner described in Embodiment 2. Additionally, matters that are not specifically described in Embodiment 2 are the same as those in Embodiment 1.

Fig. 6 includes schematic cross-sectional views showing a rotor, and its periphery, of a screw compressor according to Embodiment 2 of the present invention. Furthermore, Fig. 7 is a diagram showing, observed from a direction C in Fig. 6, a shaft main body and a key in a periphery of a rotor fixing position of the screw compressor according to Embodiment 2 of the present invention. Additionally, in Fig. 6, to facilitate understanding of structures indicated by leader lines and shapes of the respective structures, some of the structures are shaded.

The screw compressor 100 according to Embodiment 2 includes the key 26 having a substantially prismatic cylindrical shape. That is, an end portion 26a of the key 26 that is close to the stepped portion 22 has a substantially rectangular shape. To prevent the presence of a hollow part at an end portion 25a of the keyway 25 that is close to the stepped portion 22 at the time of insertion of the key 26 having such a shape into the keyway 25 of the shaft main body 21, the end portion 25a has to be machined into a substantially rectangular shape. However, a special tool is necessary to machine the end portion 25a of the keyway 25 into a substantially rectangular shape that matches the shape of the end portion 26a of the key 26, and also, a machining time for the keyway 25 is increased.

Here, a keyway is normally machined with an end mill or another tool. Consequently, also with the screw compressor 100 according to Embodiment 2, the keyway 25 is machined with an end mill. Machining the keyway 25 with an end mill makes a special tool unnecessary, and also prevents the machining time for the keyway 25 from being increased. However, as shown in Fig. 7, when the keyway 25 is machined with an end mill, the end portion 25a of the keyway 25 has at least a part formed into an arc shape that is defined by an outer circumferential shape of the end mill. For example, the end portion 25a of the keyway 25 is formed into a semi-circular shape. Consequently, when the key 26 having a substantially prismatic cylindrical shape is inserted into the keyway 25, a small hollow part 34 is formed at the end portion 25a of the keyway 25.

Consequently, with the screw compressor 100 according to Embodiment 2, the spacer 28 is formed, as shown in Fig. 6, to prevent an increase in the shift between the center of gravity of the rotary body and the axial center of the shaft main body 21 caused by movement of the center of gravity of the rotary body caused by the hollow part 34. More specifically, the spacer 28 according to Embodiment 2 includes, on an outer circumferential portion 32, a cut-out 33 that is formed at a position symmetrical to the keyway 25, or in other words, the hollow part 34, about the axial center of the shaft main body 21. In other words, the spacer 28 includes, on the outer circumferential portion 32, the cut-out 33 that is formed at a position symmetrical to the keyway 31 about a center axis of the through hole 29.

By forming the spacer 28 in the above manner, eccentricity of the center of gravity of the rotary body caused by the hollow part 34 may be offset by the cut-out 33. That is, movement of the center of gravity of the rotary body caused by the hollow part 34 may be prevented, and an increase in the shift between the center of gravity of the rotary body and the axial center of the shaft main body 21 may be prevented. Consequently, with the screw compressor 100 according to Embodiment 2, oscillation and noise generated at the screw compressor 100 may be suppressed even when the hollow part 34 is formed at the end portion 25a of the keyway 25.

Additionally, the position where the cut-out 33 is formed is not limited to the outer circumferential portion 32. The cut-out 33 may also be formed on the inner circumferential portion 30 of the spacer 28 as long as the position is symmetrical to the keyway 25, that is, the hollow part 34, about the axial center of the shaft main body 21, or in other words, as long as the position is symmetrical to the keyway 31 about the center axis of the through hole 29. Moreover, the cut-out 33 may also be formed on each of the inner circumferential portion 30 and the outer circumferential portion 32. That is, oscillation and noise generated at the screw compressor 100 may be suppressed by providing the cut-out 33 at the spacer 28, on at least one of the inner circumferential portion 30 or the outer circumferential portion 32 of the spacer 28.

### Embodiment 3

In the case of machining the keyway 25 with an end mill, the center of gravity of the rotary body may be prevented from being moved, and the shift between the center of gravity of the rotary body and the axial center of the shaft main body 21 may be prevented from being increased, by causing the key to have a shape as described in Embodiment 3. Additionally, matters that are not specifically described in Embodiment 3 are the same as those in Embodiment 1 or Embodiment 2.

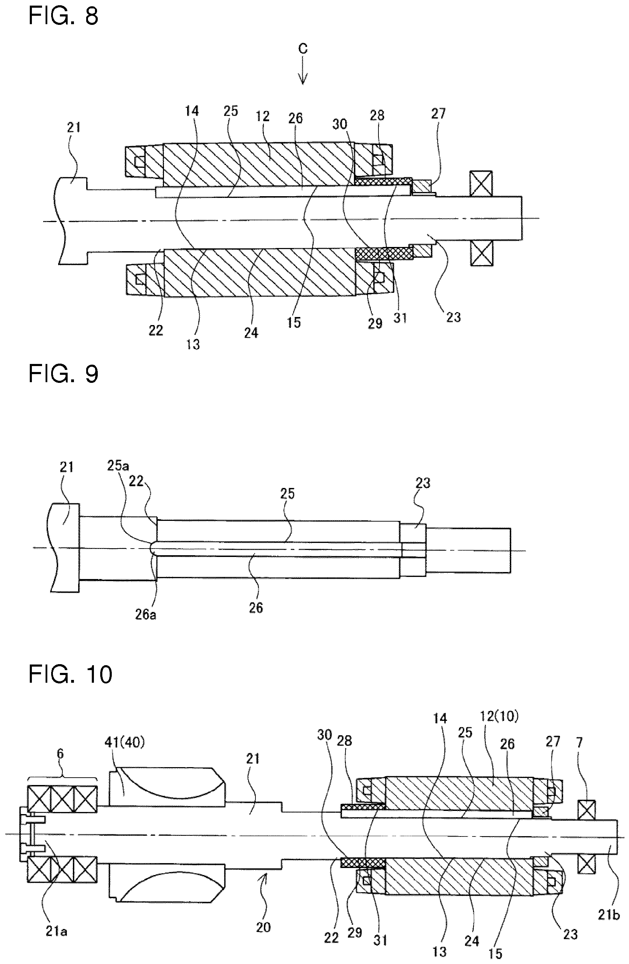

Fig. 8 is a schematic cross-sectional view showing a rotor, and its periphery, of a screw compressor according to Embodiment 3 of the present invention. Furthermore, Fig. 9 is a diagram showing, observed from a direction C in Fig. 8, a shaft main body and a key in a periphery of a rotor fixing position of the screw compressor according to Embodiment 3 of the present invention. Additionally, in Fig. 8, to facilitate understanding of structures indicated by leader lines and shapes of the respective structures, some of the structures are shaded.

As in Embodiment 2, with the screw compressor 100 according to Embodiment 3, the keyway 25 of the shaft main body 21 is machined with an end mill. Consequently, the end portion 25a of the keyway 25 is formed into a semi-circular shape, for example. The screw compressor 100 according to Embodiment 3 is different from Embodiment 2 in the shape of the end portion 26a of the key 26. In Embodiment 3, the end portion 26a of the key 26 is formed into a shape that corresponds to the shape of the end portion 25a of the keyway 25. That is, in Embodiment 3, the end portion 26a of the key 26 is formed into a semi-circular shape. Additionally, "correspondence" in Embodiment 3 means substantial correspondence, not strict correspondence. Consequently, in a case where there is a difference between the shape of the end portion 26a of the key 26 and the shape of the end portion 25a of the keyway 25 within a limit of machining error, the shapes may be said to "correspond to each other" according to Embodiment 3.

By forming the key 26 in the above manner, the hollow part 34 may be prevented from being left at the end portion 25a of the keyway 25. Consequently, with the screw compressor 100 according to Embodiment 3, even when the keyway 25 is machined with an end mill, movement of the center of gravity of the rotary body may be prevented, and an increase in the shift between the center of gravity of the rotary body and the axial center of the shaft main body 21 may be prevented. That is, with the screw compressor 100 according to Embodiment 3, oscillation and noise generated at the screw compressor 100 may be suppressed even when the keyway 25 is machined with an end mill.

### Embodiment 4

In Embodiments 1 to 3, the spacer 28 is located between the rotor 12 and the nut 27. In other words, in Embodiments 1 to 3, the spacer 28 is located between the rotor 12 and the male screw portion 23 of the shaft main body 21. However, a location of the spacer 28 is not limited to such a position, and the spacer 28 may alternatively be located at a position described in Embodiment 4. Additionally, matters that are not specifically described in Embodiment 4 are the same as those in any one of Embodiments 1 to 3.

Fig. 10 is a schematic cross-sectional view showing a rotary body, and its periphery, of a screw compressor according to Embodiment 4 of the present invention. Additionally, in Fig. 10, to facilitate understanding of structures indicated by leader lines and shapes of the respective structures, some of the structures are shaded.

With the screw compressor 100 according to Embodiment 4, as in Embodiments 1 to 3, the screw rotor 41 of the compression mechanism unit 40 is fixed at a part of the shaft main body 21 that is closer to the first end portion 21a than is the stepped portion 22. In other words, with the screw compressor 100 according to Embodiment 4, as in Embodiments 1 to 3, the compression mechanism unit 40 is coupled to a part of the shaft main body 21 that is closer to the first end portion 21a than is the stepped portion 22. Furthermore, with the screw compressor 100 according to Embodiment 4, as in Embodiments 1 to 3, the rotor 12 of the motor 10 and the spacer 28 are provided at a part of the shaft main body 21 that is closer to the second end portion 21b than is the stepped portion 22. Specifically, the rotor 12 and the spacer 28 are sandwiched between the stepped portion 22 and the nut 27, and are fixed to the shaft main body 21.

The screw compressor 100 according to Embodiment 4 is different from Embodiments 1 to 3 in the location of the spacer 28. In Embodiments 1 to 3, the spacer 28 is located between the rotor 12 and the nut 27 (or in other words, the male screw portion 23). That is, in Embodiments 1 to 3, an end portion of the rotor 12 comes into contact with the stepped portion 22 of the shaft main body 21. On the other hand, with the screw compressor 100 according to Embodiment 4, the spacer 28 is located between the stepped portion 22 and the rotor 12. That is, with the screw compressor 100 according to Embodiment 4, an end portion of the spacer 28 comes into contact with the stepped portion 22 of the shaft main body 21. By locating the spacer 28 closer to the stepped portion 22 than is the rotor 12, as in Embodiment 4, the rotor 12, which is a heavy object, may be located at a position closer to the second bearing 7 compared to a case in Embodiments 1 to 3.

As the shaft main body 21 is supported by the first bearing 6 and the second bearing 7 in such a manner that the shaft main body 21 is rotatable, the rotary body rotates around the axial center of the shaft main body 21. At this time, of the components included in the rotary body and fixed to the shaft main body 21, a component that has a center of gravity that is shifted from the axial center of the shaft main body 21 causes an increase in oscillation and noise (beat sound) at the rotary body. The closer the component is to a center between the first bearing 6 and the second bearing 7, or in other words, the farther separated the component is from the first bearing 6 and the second bearing 7, which are supporting points of the rotary body, the greater oscillation and noise (beat sound) at the rotary body are increased. Moreover, of the components included in the rotary body and fixed to the shaft main body 21, a component that has a center of gravity that is shifted from the axial center of the shaft main body 21 causes an increase in oscillation and noise (beat sound) at the rotary body. The greater the weight of the component, the greater oscillation and noise (beat sound) at the rotary body are increased.

Moreover, in a case where a hollow or another element is formed inside the rotor 12 at the time of manufacture of the rotor 12, and the center of gravity of the rotor 12 is eccentric, such eccentricity of the center of gravity is difficult to be detected, and it is difficult to correct the eccentricity of the center of gravity by the spacer 28 described above.

However, by locating the spacer 28 in the manner described in Embodiment 4, and locating the rotor 12, which is a heavy object, at a position close to the second bearing 7, which is a supporting point of the rotary body, oscillation and noise at the screw compressor 100 may be suppressed even in a case where the center of gravity of the rotor 12 is eccentric.

Additionally, in the case where the hollow part 34 is formed at the end portion 25a of the keyway 25, as in Embodiment 2, the spacer 28 is located close to the male screw portion 23 (or in other words, close to the nut 27) than is the hollow part 34. That is, the key 26 is inserted in the keyway 31 of the spacer 28. This is to suppress a shift in the center of gravity of the rotary body that is caused by the hollow part 327. In the case where the hollow part 34 is formed at the end portion 25a of the keyway 25, the hollow part 34 and the cut-out 33 for offsetting the eccentricity of the center of gravity of the rotary body caused by the hollow part 34 may be brought closer by locating the spacer 28 in the manner described in Embodiment 4. As described above, levels of generated oscillation and noise are different depending on the position of the rotary body where the eccentricity of the center of gravity is caused and on the distances to the first bearing 6 and the second bearing 7, which are supporting points of the rotary body. Consequently, bringing the hollow part 34 and the cut-out 33 closer enables oscillation and noise to be easily suppressed.

Here, the spacer 28 may be located between the rotor 12 and the nut 27 (or in other words, the male screw portion 23) and also between the stepped portion 22 and the rotor 12. In other words, the spacer 28 may be divided into two, and one of the two may be provided between the rotor 12 and the nut 27 (or in other words, the male screw portion 23), and the other may be provided between the stepped portion 22 and the rotor 12. In the case where the spacer 28 is located in this manner, a thickness of the spacer 28 that is located between the rotor 12 and the nut 27 (or in other words, the male screw portion 23) may be reduced than that in Embodiments 1 to 3. Additionally, the thickness of the spacer 28 is a length of the spacer 28 in the axial direction of the shaft main body 21. That is, also when the spacer 28 is located in this manner, the rotor 12, which is a heavy object, may be located at a position closer to the second bearing 7, which is a supporting point of the rotary body, than that in Embodiments 1 to 3, and oscillation and noise at the screw compressor 100 may be suppressed even when the center of gravity of the rotor 12 is eccentric.

Embodiments 1 to 4 described above describe the present invention taking the screw compressor 100 provided with the single-screw compression mechanism unit 40 as an example. The reason is that, with the screw compressor, the rotor of the motor is in many cases fixed to the shaft main body in such a manner that the rotor is detachable, and thus, application of the present invention is particularly effective. However, the compression mechanism unit of the compressor according to the present invention is not limited to a single-screw compression mechanism unit. As described above, the compressor according to the present invention is characteristic in the fixing structure for fixing the rotor of the motor to the shaft main body in such a manner that the rotor is detachable. Consequently, various compression mechanism units such as a scroll compression mechanism unit and a rotary compression mechanism unit may be adopted as the compression mechanism unit of the compressor according to the present invention.

As described above, the compressor according to any one of Embodiments 1 to 4 includes the motor 10 including the rotor 12, the shaft portion 20 including the shaft main body 21 that is coupled to the rotor 12, and the compression mechanism unit coupled to the shaft main body 21 and configured to compress refrigerant by use of a driving force of the motor 10 transmitted through the shaft main body 21. The rotor 12 includes the through hole 13 (first through hole), and the keyway 15 (first keyway) that is formed on the inner circumferential portion 14 and extends along the direction in which the through hole 13 passes through, and the inner circumferential portion 14 corresponds to a wall surface portion that defines the through hole 13. The shaft main body 21 includes the stepped portion 22, the male screw portion 23, and the keyway 25 (second keyway) that is formed on a part of the outer circumferential portion 24 of the shaft main body 21 that is between the stepped portion 22 and the male screw portion 23 and extends along the axial direction of the shaft main body 21, and a part between the stepped portion 22 and the male screw portion 23 is inserted in the through hole 13 of the rotor 12. The shaft portion 20 includes the key 26 that is inserted in the keyway 15 of the rotor 12 and the keyway 25 of the shaft main body 21, the key 26 having a longer length than does the rotor 12 in the direction in which the through hole 13 passes through, the spacer 28 including the through hole 29 (second through hole) in which a part of the shaft main body 21 that is between the stepped portion 22 and the male screw portion 23 is inserted, and the keyway 31 (third keyway) that is formed on the inner circumferential portion 30 and extends along the direction in which the through hole 29 passes through, the key 26 being inserted in the keyway 31, a wall surface portion that defining the through hole 29, the spacer 28 being located at at least one of a part between the stepped portion 22 of the shaft main body 21 and the rotor 12 or a part between the male screw portion 23 of the shaft main body 21 and the rotor 12, and the nut 27 in which the male screw portion 23 of the shaft main body 21 is screwed, the nut 27 sandwiching and fixing the rotor 12 and the spacer 28 with the stepped portion 22 of the shaft main body 21.

By forming the compressor in the above manner, a shift of the center of gravity of the rotary body that is caused by the hollow part 327 may be suppressed, and oscillation and noise generated at the compressor may be suppressed.

Furthermore, with the compressor according to Embodiment 2, the hollow part 34 to which the key 26 is not provided is formed at the keyway 25 of the shaft main body 21, on the end portion 25a close to the stepped portion 22, and the spacer 28 includes the cut-out 33 that is formed at a position symmetrical to the keyway 31 about the center axis of the through hole 29, the cut-out 33 being formed on at least one of the inner circumferential portion 30 or the outer circumferential portion 32 of the spacer 28. At this time, the spacer 28 is located close to the male screw portion 23 than is the hollow part 34.

By forming the compressor in the above manner, eccentricity of the center of gravity of the rotary body caused by the hollow part 34 may be offset by the cut-out 33, and thus, movement of the center of gravity of the rotary body caused by the hollow part 34 may be prevented, and oscillation and noise generated at the compressor may be suppressed.

Furthermore, with the compressor according to Embodiment 3, the shape of the end portion 26a of the key 26 that is close to the stepped portion 22 corresponds to the shape of the end portion 25a of the keyway 25 of the shaft main body 21 that is close to the stepped portion 22.

By forming the compressor in the above manner, the hollow part 34 may be prevented from being left, and oscillation and noise generated at the compressor may be suppressed.

Furthermore, with the compressor according to Embodiment 4, in a case where, of both end portions of the shaft main body 21, an end portion that is opposite to the male screw portion 23 across the stepped portion 22 is defined as the first end portion 21a, and an end portion that is closer to the male screw portion 23 than is the stepped portion 22 is defined as the second end portion 21b, the compressor includes the first bearing 6 that supports the shaft main body 21 in a range between the first end portion 21a and the stepped portion 22 in such a manner that the shaft main body 21 is rotatable, and the second bearing 7 that supports the shaft main body 21 in a range between the second end portion 21b and the male screw portion 23 in such a manner that the shaft main body 21 is rotatable. Moreover, the compression mechanism unit is coupled to the shaft main body 21 at a part of the shaft main body 21 that is closer to the first end portion 21a than is the stepped portion 22. The spacer 28 is located between the stepped portion 22 of the shaft main body 21 and the rotor 12.

By forming the compressor in the above manner, the rotor 12, which is a heavy object, may be positioned close to the second bearing 7, which is a supporting point of the rotary body, and oscillation and noise at the compressor may be suppressed even when the center of gravity of the rotor 12 is eccentric.

Furthermore, with the compressor according to any one of Embodiments 1 to 4, the motor 10 is driven at a variable speed by the inverter 151.

In the case where the motor of the compressor is driven at a variable speed by the inverter, the rotary body of the compressor is sometimes rotated at a high speed, and oscillation and noise tend to be easily increased. Consequently, it is particularly effective to use the compressor according to any one of Embodiments 1 to 4 as the compressor that is driven at a variable speed by an inverter.

Moreover, the compressor according to any one of Embodiments 1 to 4 includes the casing 1 that houses the compression mechanism unit, where the compression mechanism unit is the single-screw compression mechanism unit 40, and includes the screw rotor 41 including the screw grooves 41a on the outer circumferential portion, the screw rotor 41 being fixed to the shaft main body 21, and the gate rotors 42 each including, on the outer circumferential portion, the teeth 42a that mesh and engage with the screw grooves 41a, the gate rotors 42 defining the compression chambers 43 with the screw grooves 41a and the inner circumferential surface of the casing 1.

With the screw compressor provided with the single-screw compression mechanism unit, the rotor of the motor is in many cases fixed to the shaft main body in such a manner that the rotor is detachable. Consequently, it is particularly effective to form the screw compressor provided with the single-screw compression mechanism unit in the form of the compressor according to any one of Embodiments 1 to 4.

Moreover, the refrigeration cycle apparatus 200 according to any one of Embodiments 1 to 4 includes the compressor according to any one of Embodiments 1 to 4, the condenser 101 configured to condense refrigerant that is compressed at the compressor, the expansion device 102 configured to expand the refrigerant flowing out of the condenser 101, and the evaporator 103 configured to evaporate the refrigerant flowing out of the expansion device 102, where an HFO refrigerant or an HFO-based mixed refrigerant is used as the refrigerant.

Because the HFO refrigerant is low-pressure refrigerant at a low operating pressure, density is smaller and a refrigeration capacity is reduced compared to a case of using an HFC refrigerant such as R410A and R407C, and thus, the compressor is caused to rotate at a high speed. That is, the rotary body of the compressor is caused to rotate at a high speed. Consequently, in the case of using the HFO refrigerant, oscillation and noise generated by the shift between the center of gravity of the rotary body and the axial center of the shaft main body tend to be more easily increased. In the case of using the HFO refrigerant, it is therefore particularly effective to use the compressor according to any one of Embodiments 1 to 4, which is capable of suppressing oscillation and noise.

### Reference Signs List

1 casing 2 motor cover 2a suction port 3 oil separator 3a discharge port 6 first bearing 7 second bearing 10 motor 11 stator 12 rotor 13 through hole 14 inner circumferential portion 15 keyway 20 shaft portion 21 shaft main body 21a first end portion 21b second end portion 22 stepped portion 23 male screw portion 24 outer circumferential portion 25 keyway 25a end portion 26 key 26a end portion 27 nut 28 spacer 29 through hole 30 inner circumferential portion 31 keyway 32 outer circumferential portion 33 cut-out 34 hollow part 40 compression mechanism unit 41 screw rotor 41a screw groove 42 gate rotor 42a tooth 43 compression chamber 44 discharge port 100 screw compressor 101 condenser 102 expansion device 103 evaporator 150 controller 151 inverter 200 refrigeration cycle apparatus 321 shaft main body (in some screw compressor) 321b second end portion (in some screw compressor) 322 stepped portion (in some screw compressor) 323 male screw portion (in some screw compressor) 324 outer circumferential portion (in some screw compressor) 325 keyway (in some screw compressor) 326 key (in some screw compressor) 327 hollow part

## Claims

1. A compressor (100), comprising:
a motor (10) including a rotor (12);
a shaft portion (20) including a shaft main body (21) that is coupled to the rotor (12); and
a compression mechanism unit (40) coupled to the shaft main body (21) and configured to compress refrigerant by use of a driving force of the motor (10) transmitted through the shaft main body (21),
the rotor (12) including a first through hole (13) and a first keyway (15) that is formed on an inner circumferential portion (14) and extends along a direction in which the first through hole (13) passes through, the inner circumferential portion (14) corresponding to a wall surface portion that defines the first through hole (13),
the shaft main body (21) including a stepped portion (22), a male screw portion (23), and a second keyway (25) that is formed on a part of an outer circumferential portion (24) of the shaft main body (21) that is between the stepped portion (22) and the male screw portion (23) and extends along an axial direction of the shaft main body (21),
a part of the shaft main body (21) that is between the stepped portion (22) and the male screw portion (23) being inserted in the first through hole (13) of the rotor (12),
the shaft portion (20) including
a key (26) that is inserted in the first keyway (15) of the rotor (12) and the second keyway (25) of the shaft main body (21), the key (26) having a longer length than does the rotor (12) in the direction in which the first through hole (13) passes through,
a spacer (28) including a second through hole (29) in which a part of the shaft main body (21) that is between the stepped portion (22) and the male screw portion (23) is inserted, and a third keyway (31) that is formed on an inner circumferential portion (30) of the spacer and extends along a direction in which the second through hole (29) passes through, the inner circumferential portion (30) corresponding to a wall surface portion that defines the second through hole (29), the key (26) being inserted in the third keyway (31), the spacer (28) being located at at least one of a part between the stepped portion (22) of the shaft main body (21) and the rotor (12) or a part between the male screw portion (23) of the shaft main body (21) and the rotor (12), and
a nut (27) in which the male screw portion (23) of the shaft main body (21) is screwed, the nut (27) sandwiching and fixing the rotor (12) and the spacer (28) with the stepped portion (22) of the shaft main body (21).

2. The compressor (100) of claim 1, wherein
the second keyway (25) of the shaft main body (21) has an end portion (25a) close to the stepped portion (22), the end portion (25a) including a hollow part (34) to which the key (26) is not inserted, and
the spacer (28) includes a cut-out that is formed at a position symmetrical to the third keyway (31) about a center axis of the second through hole (29), the cut-out being formed on at least one of the inner circumferential portion (30) or an outer circumferential portion (32) of the spacer (28).

3. The compressor (100) of claim 2, wherein the spacer (28) is located closer to the male screw portion (23) than is the hollow part (34).

4. The compressor (100) of claim 1, wherein a shape of an end portion (26a) of the key (26) that is close to the stepped portion (22) corresponds to a shape of an end portion (25a) of the second keyway (25) of the shaft main body (21) that is close to the stepped portion (22).

5. The compressor (100) of any one of claims 1 to 4, wherein, in a case where, of both end portions of the shaft main body (21), an end portion that is opposite to the male screw portion (23) across the stepped portion (22) is defined as a first end portion (21a) and an end portion that is closer to the male screw portion (23) than is the stepped portion (22) is defined as a second end portion (21b), the compressor (100) comprises:
a first bearing (6) that supports the shaft main body (21) in a range between the first end portion (21a) and the stepped portion (22) in such a manner that the shaft main body (21) is rotatable; and
a second bearing (7) that supports the shaft main body (21) in a range between the second end portion (21b) and the male screw portion (23) in such a manner that the shaft main body (21) is rotatable, wherein
the compression mechanism unit (40) is coupled to the shaft main body (21) at a part of the shaft main body (21) that is closer to the first end portion (21a) than is the stepped portion (22), and
the spacer (28) is located between the stepped portion (22) of the shaft main body (21) and the rotor (12).

6. The compressor (100) of any one of claims 1 to 5, wherein the motor (10) is configured to be driven at a variable speed by an inverter.

7. The compressor (100) of any one of claims 1 to 6, the compressor (100) comprising a casing (1) that houses the compression mechanism unit (40), wherein
the compression mechanism unit (40) is a single-screw compression mechanism unit, and
the compression mechanism unit (40) includes
a screw rotor (41) including screw grooves (41a) on an outer circumferential portion, the screw rotor (41) being fixed to the shaft main body (21), and
a gate rotor (42) including, on an outer circumferential portion, teeth (42a) that mesh and engage with the screw grooves (41a), the gate rotor (42) forming compression chambers (43) with the screw grooves (41a) and an inner circumferential surface of the casing (1).

8. A refrigeration cycle apparatus (200), comprising:
the compressor (100) of any one of claims 1 to 7;
a condenser (101) configured to condense refrigerant that is compressed at the compressor (100);
an expansion device (102) configured to expand the refrigerant flowing out of the condenser (101); and
an evaporator (103) configured to evaporate the refrigerant flowing out of the expansion device (102), wherein
an HFO refrigerant or an HFO-based mixed refrigerant is used as the refrigerant.

## Patentansprüche

1. Verdichter (100), umfassend:
einen Motor (10), der einen Rotor (12) aufweist;
einen Wellenabschnitt (20), der einen Wellenhauptkörper (21) aufweist, der mit dem Rotor (12) gekoppelt ist; und
eine Verdichtungsmechanismuseinheit (40), die mit dem Wellenhauptkörper (21) gekoppelt ist und eingerichtet ist, Kältemittel unter Verwendung einer Antriebskraft des Motors (10), die durch den Wellenhauptkörper (21) übertragen wird, zu verdichten,
wobei der Rotor (12) ein erstes Durchgangsloch (13) und eine erste Keilnut (15), die an einem inneren Umfangsabschnitt (14) ausgebildet ist und sich entlang einer Richtung erstreckt, in der das erste Durchgangsloch (13) durchläuft, aufweist, wobei der innere Umfangsabschnitt (14) einem Wandflächenabschnitt entspricht, der das erste Durchgangsloch (13) definiert,
wobei der Wellenhauptkörper (21) einen gestuften Abschnitt (22), einen Außengewindeabschnitt (23) und eine zweite Keilnut (25), die an einem Teil eines Außenumfangsabschnitts (24) des Wellenhauptkörpers (21) ausgebildet ist, der zwischen dem gestuften Abschnitt (22) und dem Außengewindeabschnitt (23) liegt und sich entlang einer axialen Richtung des Wellenhauptkörpers (21) erstreckt, aufweist,
wobei ein Teil des Wellenhauptkörpers (21), der zwischen dem gestuften Abschnitt (22) und dem Außengewindeabschnitt (23) liegt, in das Durchgangsloch (13) des Rotors (12) eingeführt ist,
wobei der Wellenabschnitt (20) aufweist
einen Keil (26), der in die erste Keilnut (15) des Rotors (12) und die zweite Keilnut (25) des Wellenhauptkörpers (21) eingeführt ist, wobei der Keil (26) in der Richtung, in der das erste Durchgangsloch (13) durchläuft, eine längere Länge als der Rotor (12) aufweist,
einen Abstandshalter (28), der ein zweites Durchgangsloch (29), in das ein Teil des Wellenhauptkörpers (21), der sich zwischen dem gestuften Abschnitt (22) und dem Außengewindeabschnitt (23) befindet, eingeführt ist, und eine dritte Keilnut (31), die an einem inneren Umfangsabschnitt (30) des Abstandshalters ausgebildet ist und sich entlang einer Richtung erstreckt, in der das zweite Durchgangsloch (29) durchläuft, aufweist, wobei der innere Umfangsabschnitt (30) einem Wandflächenabschnitt entspricht, der das zweite Durchgangsloch (29) definiert, wobei der Keil (26) in die dritte Keilnut (31) eingeführt ist, wobei der Abstandshalter (28) an mindestens einem von einem Teil zwischen dem gestuften Abschnitt (22) des Wellenhauptkörpers (21) und dem Rotor (12) oder einem Teil zwischen dem Außengewindeabschnitt (23) des Wellenhauptkörpers (21) und dem Rotor (12) angeordnet ist, und
eine Mutter (27), in die der Außengewindeabschnitt (23) des Wellenhauptkörpers (21) geschraubt ist, wobei die Mutter (27) den Rotor (12) und den Abstandshalter (28) mit dem gestuften Abschnitt (22) des Wellenhauptkörpers (21) einklemmt und fixiert.

2. Verdichter (100) nach Anspruch 1, wobei
die zweite Keilnut (25) des Wellenhauptkörpers (21) einen Endabschnitt (25a) aufweist, der sich nahe an dem gestuften Abschnitt (22) befindet, wobei der Endabschnitt (25a) ein Hohlteil (34) aufweist, in das der Keil (26) nicht eingeführt ist, und
der Abstandshalter (28) einen Ausschnitt aufweist, der an einer Position symmetrisch zu der dritten Keilnut (31) um eine Mittelachse des zweiten Durchgangslochs (29) ausgebildet ist, wobei der Ausschnitt an mindestens einem von dem inneren Umfangsabschnitt (30) oder einem äußeren Umfangsabschnitt (32) des Abstandshalters (28) ausgebildet ist.

3. Verdichter (100) nach Anspruch 2, wobei der Abstandshalter (28) näher an dem Außengewindeabschnitt (23) angeordnet ist als das Hohlteil (34).

4. Verdichter (100) nach Anspruch 1, wobei eine Form eines Endabschnitts (26a) des Keils (26), der sich nahe an dem gestuften Abschnitt (22) befindet, einer Form eines Endabschnitts (25a) der zweiten Keilnut (25) des Wellenhauptkörpers (21) entspricht, der sich nahe an dem gestuften Abschnitt (22) befindet.

5. Verdichter (100) nach einem der Ansprüche 1 bis 4, wobei in einem Fall, in dem von beiden Endabschnitten des Wellenhauptkörpers (21) ein Endabschnitt, der dem Außengewindeabschnitt (23) über den gestuften Abschnitt (22) hinweg gegenüberliegt, als ein erster Endabschnitt (21a) definiert ist, und ein Endabschnitt, der dem Außengewindeabschnitt (23) näher ist als der gestufte Abschnitt (22), als ein zweiter Endabschnitt (21b) definiert ist, der Verdichter (100) umfasst:
ein erstes Lager (6), das den Wellenhauptkörper (21) in einem Bereich zwischen dem ersten Endabschnitt (21a) und dem gestuften Abschnitt (22) so stützt, dass der Wellenhauptkörper (21) drehbar ist; und
ein zweites Lager (7), das den Wellenhauptkörper (21) in einem Bereich zwischen dem zweiten Endabschnitt (21b) und dem Außengewindeabschnitt (23) so stützt, dass der Wellenhauptkörper (21) drehbar ist, wobei
die Verdichtungsmechanismuseinheit (40) mit dem Wellenhauptkörper (21) an einem Teil des Wellenhauptkörpers (21), der näher an dem ersten Endabschnitt (21a) als dem gestuften Abschnitt (22) liegt, gekoppelt ist, und
der Abstandshalter (28) zwischen dem gestuften Abschnitt (22) des Wellenhauptkörpers (21) und dem Rotor (12) angeordnet ist.

6. Verdichter (100) nach einem der Ansprüche 1 bis 5, wobei der Motor (10) eingerichtet ist, mit variabler Geschwindigkeit durch einen Inverter angetrieben zu werden.

7. Verdichter (100) nach einem der Ansprüche 1 bis 6, wobei der Verdichter (100) ein Gehäuse (1) umfasst, das die Verdichtungsmechanismuseinheit (40) beherbergt, wobei
die Verdichtungsmechanismuseinheit (40) eine Verdichtungsmechanismuseinheit mit einer einzelnen Schraube ist, und
die Verdichtungsmechanismuseinheit (40) umfasst
einen Schraubenrotor (41), der Schraubennuten (41a) an einem äußeren Umfangsabschnitt aufweist, wobei der Schraubenrotor (41) an dem Wellenhauptkörper (21) befestigt ist, und
einen Torrotor (42), der an einem äußeren Umfangsabschnitt Zähne (42a) aufweist, die in die Schraubenrillen (41a) passen und mit diesen in Eingriff stehen, wobei der Torrotor (42) mit den Schraubenrillen (41a) und einer inneren Umfangsfläche des Gehäuses (1) Verdichtungskammern (43) bildet.

8. Kältekreislaufvorrichtung (200), umfassend:
den Verdichter (100) nach einem der Ansprüche 1 bis 7;
einen Kondensator (101), der eingerichtet ist, am Verdichter (100) verdichtetes Kältemittel zu kondensieren;
eine Expansionseinrichtung (102), die eingerichtet ist, das aus dem Kondensator (101) strömende Kältemittel zu expandieren; und
einen Verdampfer (103), der eingerichtet ist, das aus der Expansionseinrichtung (102) strömende Kältemittel zu verdampfen, wobei
ein HFO-Kältemittel oder ein gemischtes Kältemittel auf HFO-Basis als das Kältemittel verwendet wird.

## Revendications

1. Compresseur (100), comprenant :
un moteur (10) comprenant un rotor (12) ;
une partie arbre (20) comprenant un corps principal d'arbre (21) qui est couplé au rotor (12) ; et
une unité mécanisme de compression (40) couplée au corps principal d'arbre (21), et configurée pour comprimer un fluide frigorigène au moyen d'une force d'entraînement du moteur (10) transmise par l'intermédiaire du corps principal d'arbre (21),
le rotor (12) comprenant un premier trou traversant (13), et une première rainure de clavette (15) qui est formée sur une partie circonférentielle intérieure (14), et qui s'étend le long de la direction dans laquelle traverse le premier trou traversant (13), la partie circonférentielle intérieure (14) correspondant à une partie surface de paroi qui définit le premier trou traversant (13),
le corps principal d'arbre (21) comprenant une partie étagée (22), une partie vis mâle (23), et une deuxième rainure de clavette (25) qui est formée sur une partie d'une partie circonférentielle extérieure (24) du corps principal d'arbre (21), qui se situe entre la partie étagée (22) et la partie vis mâle (23), et qui s'étend le long de la direction axiale du corps principal d'arbre (21),
une partie du corps principal d'arbre (21) qui se situe entre la partie étagée (22) et la partie vis mâle (23) étant insérée dans le premier trou traversant (13) du rotor (12),
la partie arbre (20) comprenant
une clavette (26) qui est insérée dans la première rainure de clavette (15) du rotor (12), et dans la deuxième rainure de clavette (25) du corps principal d'arbre (21), la clavette (26) présentant une longueur plus longue que celle du rotor (12) dans la direction dans laquelle traverse le premier trou traversant (13),
une entretoise (28) comprenant un second trou traversant (29) dans lequel est insérée une partie du corps principal d'arbre (21) qui se situe entre la partie étagée (22) et la partie vis mâle (23), et une troisième rainure de clavette (31) qui est formée sur une partie circonférentielle intérieure (30) de l'entretoise, et qui s'étend le long de la direction dans laquelle traverse le second trou traversant (29), la partie circonférentielle intérieure (30) correspondant à une partie surface de paroi qui définit le second trou traversant (29), la clavette (26) étant insérée dans la troisième rainure de clavette (31), l'entretoise (28) se situant au niveau de l'une au moins d'une partie entre la partie étagée (22) du corps principal d'arbre (21) et le rotor (12), ou d'une partie entre la partie vis mâle (23) du corps principal d'arbre (21) et le rotor (12), et
un écrou (27) dans lequel est vissée la partie vis mâle (23) du corps principal d'arbre (21), l'écrou (27) prenant en sandwich et fixant le rotor (12) et l'entretoise (28) avec la partie étagée (22) du corps principal d'arbre (21).

2. Compresseur (100) selon la revendication 1, dans lequel
la deuxième rainure de clavette (25) du corps principal d'arbre (21) présente une partie extrémité (25a) proche de la partie étagée (22), la partie extrémité (25a) comprenant une partie creuse (34) dans laquelle la clavette (26) n'est pas insérée, et
l'entretoise (28) comprend une découpe qui est formée au niveau d'une position symétrique par rapport à la troisième rainure de clavette (31) autour de l'axe central du second trou traversant (29), la découpe étant formée sur l'une au moins de la partie circonférentielle intérieure (30) ou d'une partie circonférentielle extérieure (32) de l'entretoise (28).

3. Compresseur (100) selon la revendication 2, dans lequel l'entretoise (28) se situe plus près de la partie vis mâle (23) que ne l'est la partie creuse (34).

4. Compresseur (100) selon la revendication 1, dans lequel la forme d'une partie extrémité (26a) de la clavette (26) qui est proche de la partie étagée (22), correspond à la forme d'une partie extrémité (25a) de la deuxième rainure de clavette (25) du corps principal d'arbre (21) qui est proche de la partie étagée (22).

5. Compresseur (100) selon l'une quelconque des revendications 14, dans lequel, dans un cas où, parmi les deux parties extrémités du corps principal d'arbre (21), une partie extrémité qui est opposée à la partie vis mâle (23) à travers la partie étagée (22), est définie comme étant une première partie extrémité (21a), et une partie extrémité qui est plus proche de la partie vis mâle (23) que ne l'est la partie étagée (22), est définie comme étant la seconde partie extrémité (21b), le compresseur (100) comprend :
un premier roulement (6) qui supporte le corps principal d'arbre (21) dans une plage située entre la première partie extrémité (21a) et la partie étagée (22) de telle sorte que le corps principal d'arbre (21) puisse tourner ; et
un second roulement (7) qui supporte le corps principal d'arbre (21) dans une plage située entre la seconde partie extrémité (21b) et la partie vis mâle (23) de telle sorte que le corps principal d'arbre (21) puisse tourner, dans lequel
l'unité mécanisme de compression (40) est accouplée au corps principal d'arbre (21) au niveau d'une partie du corps principal d'arbre (21) qui est plus proche de la première partie extrémité (21a) que ne l'est la partie étagée (22), et
l'entretoise (28) se situe entre la partie étagée (22) du corps principal d'arbre (21) et le rotor (12).

6. Compresseur (100) selon l'une quelconque des revendications 1 à 5, dans lequel le moteur (10) est configuré pour être entraîné à une vitesse variable par un onduleur.

7. Compresseur (100) selon l'une quelconque des revendications 1 à 6, le compresseur (100) comprenant un boîtier (1) qui loge l'unité mécanisme de compression (40), dans lequel
l'unité mécanisme de compression (40) est une unité mécanisme de compression monovis, et
l'unité mécanisme de compression (40) comprend
un rotor à vis (41) comprenant des rainures de vis (41a) sur une partie circonférentielle extérieure, le rotor à vis (41) étant fixé sur le corps principal d'arbre (21), et
un rotor femelle (42) comprenant, sur une partie circonférentielle extérieure, des dents (42a) qui s'engrènent et viennent en prise avec les rainures de vis (41a), le rotor femelle (42) formant des chambres de compression (43) avec les rainures de vis (41a) et une surface circonférentielle intérieure de l'enveloppe (1).

8. Appareil de cycle de réfrigération (200), comprenant :
le compresseur (100) selon l'une quelconque des revendications 1 à 7 ;
un condenseur (101) configuré pour condenser un fluide frigorigène qui est comprimé au niveau du compresseur (100) ;
un dispositif d'expansion (102) configuré pour détendre le fluide frigorigène qui s'écoule hors du condenseur (101) ; et
un évaporateur (103) configuré pour faire évaporer le fluide frigorigène qui s'écoule hors du dispositif d'expansion (102), dans lequel
un fluide frigorigène HFO, ou un fluide frigorigène mélangé à base de HFO, est utilisé en tant que fluide frigorigène.
